# EUROPEAN PATENT SPECIFICATION

(11) **EP 2 140 185 B1**
(45) Date of publication and mention of the grant of the patent: **11.12.2013**
(21) Application number: 08754042.3
(22) Date of filing: 02.04.2008
(51) Int. Cl.: B29C 45/14, B29C 45/33, F16K 5/06, F16K 27/06

(54) **PLASTIC BASED RADIATOR VALVE AND THE PRODUCTION METHOD THEREOF**
HEIZKÖRPERVENTIL AUF KUNSTSTOFFBASIS UND HERSTELLUNGSVERFAHREN DAFÜR
SOUPAPE DE RADIATEUR À BASE DE PLASTIQUE ET PROCÉDÉ DE PRODUCTION DE CELLE-CI

(30) Priority: 13.04.2007 TR 200702519
(43) Date of publication of application: 06.01.2010
(73) Proprietor: Kalde Klima Orta Basinc Fittings Ve Valf Sanayi Anonim Sirketi, 34520 Istanbul (TR)
(72) Inventor: TOPALYAN, Aksel, 34520 Istanbul (TR)
(74) Representative: Iskender, Ibrahim
(86) International application number: PCT/TR2008/000030
(87) International publication number: WO 2008/127208

(56) References cited:
- BE-A- 586 457
- US-A- 3 807 692
- US-A- 4 172 583
- US-A- 4 430 285
- US-A- 4 488 573

## Description

### Technical Field

The invention relates to the production method for the plastic based valves that provide the connection of the radiators with the plastic based pipes, without the use of the plastic based adapters to enable the connection between the radiator valves and the plastic based pipes in the field of heating.

### Background of the Invention

In today's heating sector, the radiators are frequently used in the closed spaces such as the houses, offices, etc. The connection of the radiators with the pipes is provided by means of the radiator valves. Radiator valves may stop the flow of the liquid, when desired.

Said radiator valves are today manufactured from metal based material. In order to connect the radiator valves with the plastic pipe system following their assembly on the radiator, the assembly process must be carried out using a part so called plastic based adapter.

There is no other way of connection with the plastic based pipe. The metal based radiator valve may be produced through the metal processing methods and the connection is possible only by a threaded system.

Therefore, the assembly according to the screw connection system is possible only with the help of the plastic based adapter component, and the assembly to the plastic based pipe may be carried out by means of the socket welding, owing to the plastic based adapter.

In said system, the plastic based adapter is involved as an extra component being used. Said adapter leads to losses in the heating system and causes the loss of power.

Due to the threaded connection, the possibility is also high for the leakage to occur. This brings about the extra labor cost. The costs in time and labor are occurred for the connection of the plastic based adapter, said costs and the cost of the plastic based adapter itself cause a disadvantage for the system.

In the European Patent Application no. EP1193432 in the registry of the Turkish Patent Institute, the following phrases are included in relation to the subject: "The invention relates to a valve, particularly a radiator valve having a valve body exhibiting an inlet connection and an outlet connection, wherein there is included a closing apparatus comprising a valve member between the inlet connection and the outlet connection and a valve housing, wherein the valve body exhibits an inner room being connected to an inlet connection via an inlet mouth and to an outlet connection via an outlet mouth, wherein the valve housing is located at a first end of a canal inside a housing body, the valve body being located in the inner room, with the said valve being rotatable between a first position where a second end of the canal overlaps the inlet mouth and a second position where a second end of the canal overlaps the outlet mouth."

The radiator valve being put into practice in the above referenced application is connected with the pipes by means of an additional adapter. Consequently, the aforementioned disadvantages have not been able to be overcome.

Likewise, the useful model application no. TR 2005 04330 U in the registry of the Turkish Patent Institute includes the following phrases related to the subject: "The radiator valve with teflon gasket is used in the heating systems. The body manufactured as monobloc is made of Cu Zn 37 Pb material. In its most general form, the corner radiator valve with teflon gasket may also be referred to as a member serving to regulate the flow rate of the fluid to pass through the heaters, at the inlet and outlet. Moreover, the plastic material used in making the valve are resistant to maximum operating temperatures. In our product, the teflon gasket is used as seated into the interior of the body in the direction where there is present the water flow. The gaskets use fulfill an important duty in the connection of the spout to the body by means of a nut. The teflon gasket is important especially in providing the sealing. The teflon gasket we have produced may operate under a maximum operating pressure of 100 bar and an operating temperature of 120 C. Since the teflon gasket is resistant to pressure and temperature and thus it does not undergo deformation, it hinders the operation of the corner radiator valve."

In the above referenced application, the teflon gasket is used to provide sealing, but it is not possible to avoid the energy losses in the heating systems.

Similarly, the useful model application no. TR 2006 04328 U in the registry of the Turkish Patent Institute includes the following phrases related to the subject: "The thermostatic valve insert adapter for the aluminum radiators is the metal adapter to be used in directly fixing the thermostatic valve inserts to the aluminum radiator cap profiles without the flat or corner valve bodies being used characterized in that it comprises two cylindrically shaped pieces or one metallic piece processed as monobloc. In the design with two pieces, the adapter comprises two parts, namely the insert valve seat and the insert support. The valve seat is mounted to the radiator cap profile by means of the tight/strike engagement method such that the full open position of the thermostatic valve insert is provided. Insert support is a cylindrical metal part, with the interior thereof being threaded in harmony with the male screw threads on the exterior surface of the insert. The external surface thereof comprises a cylindrical surface connected to the radiator cap by means of the tight/strike engagement method or a spacing that seats on the frontal surface of the cap by means of the threads. The monobloc design is provided by manufacturing this bicomponent design as monobloc."

Also in this application, the radiator valve provides the connection with the conveying pipes by means of an adapter and said disadvantages may not be eliminated.

Another application on the other hand relates to the valves numbered US 3807 692 A . In the published abstract section of this application the inscription:" A rotary valve having a rotary member with an outer surface forming at least a segment of a sphere. A passage extends through to opposite sides of the segment. An annular recess is in the segment abutting and surrounding each end of the passage. A housing rotatably mounts the rotary member therein and has a passage therethrough comprising a passage portion that is alignable with the rotary member passage and has a larger perimeter than the inside perimeter of the recess. A pair of resilient annular seals are fixed in between the housing and rotary member. One seal is around each end of the segment passage. The seals extend into the housing member passage into abutting sealing engagement with the annular recesses" are found.

US 3807692A patent application mentioned above relate to seal of plastic spherical valves. That is provided by giving specific shapes to molding cores. Furthermore, these valves are not for radiator valves but linear type valves which can be used for general purposes and be connected only by plastic welding. Also, it is not likely to manufacture the valves of such sealing art as valve of L (joint).

Another application on the other hand relates to the valves numbered BE586457. In the published abstract section of this application the inscription:" tap connection for devices with inlet and outlet are coaxial with the combination in one piece of a coaxial connector tube and a cavity whose axis is parallel to the axis of the tubing, cavity used in some pla-valve, wherein the cavity for containing ne the valve has a polygonal cross section and, in particular, square and in this cavity is reported an intermediate part of the same shape as the seat of the faucet" are found

Belgian application based on BE586457, called frederik BOONSTRA system is a coupling valve use for fluid counters (water and gas), pressure regulator and similar devices, which have coaxial input and output. Production method is casting instead of injection. In same time, it is not a ball valve; it controls the fluid with a shaft instead of a ball.

As a result of the aforesaid disadvantages, the search has been initiated for an innovation in the technique of radiator valve production.

### Description of the Invention

Based on the mentioned state of the art, the object of the invention is to provide a production method for plastic based radiator valves, wherein the connection of the radiator valves with the pipes is achieved without the use of an intermediary apparatus.

Another object of the invention is to provide a production method for plastic based radiator valves, that eliminate the problems with leakage, due to the metal bodies of the radiator valves being connected with the plastic adapter by means of the screw threads.

Another object of the invention is to provide a production method for plastic based radiator valves, that minimize the production cost, since no additional apparatus is needed to carry out the said connection.

Another object of the invention is to provide a production method for plastic based radiator valves, that eliminate the additional labor, since no additional apparatus is needed to carry out the said connection.

Still another object of the invention is to provide a production method for plastic based radiator valves, that eliminate the problem of heat and energy loss occurring in the heating systems.

Still another object of the invention is to provide a production method for plastic based radiator valves, that minimize the production and assembly time, since no additional apparatus is needed to carry out the said connection.

### Description of the Figures

Figure - 1 Perspective view of a plastic based radiator valve
Figure - 2 Side sectional view of a plastic based radiator valve
Figure - 3 The assembled view of the mold used in the method according to the independent claim.

### Reference Numbers

1. Radiator Valve
1.1 Insert
1.2 Spout
1.3 Spout Nut
1.4 Valve Handle
1.5 Valve Body
2. Spherical Valve Interior Set
3. Plastic Adapter
3.1 Plastic Body
4. Mold
4.1 Movable Mold Core
4.2 Stationary Mold Core

### Detailed Description of the Invention

In Figure-1, the perspective view of the plastic based radiator valve (1) is depicted.

Said radiator valve (1) comprises the spout (1.2), insert (1.1), spout nut (1.3), valve handle (1.4), spherical valve interior set (2), valve body (1.5) and plastic body (3.1), as the main components.

Radiator valve (1) is connected to the radiator by means of the spout (1.2), insert (1.1) and the spout nut (1.3).

Said spherical valve interior set (2) and the valve handle (1.4) constitute the valve group. Plastic adapter (3) is connected in monobloc, as a continuation of the valve body (1.5). Said plastic adapter (3) and valve body (1.5) are positioned as the components that form the framework of the radiator valve (1).

Said valve body (1.5) protects the spherical valve interior set (2), and it also bears the valve handle (1.4).

Plastic adapter (3) is positioned as the component that provides the connection of the radiator valve (1) with the pipes. Said plastic adapter (3) is surrounded by the plastic body (3.1).

According to the preferred embodiment of the invention, said valve body (1.5) and plastic adapter (3) are manufactured from plastic and the plastic derivative.

In Figure-2, the perspective view of said radiator valve (1) is presented.

Said spout (1.2) and insert (1.1) are made of metal material, and they are connected with the valve body (1.5). The spout nut (1.3), which is located around the spout (1.2), secures the radiator valve (1) on the radiator. Therefore, the spout (1.2) is positioned as the connecting piece attaching the radiator valve (1) to the radiator.

The core system employed in the plastic injection mold enables the plastic based radiator valve (1) to be manufactured.

In Figure-3, the assembled view of said mold (4) is depicted. First, the insert (1.1) is positioned over the stationary mold core (4.2) located inside said mold (4).
Then the spherical valve interior set (2) is positioned over said insert (1.1).

The movable mold core (4.1) moves in a synchronous manner with the closing of the mold (4) in a first direction (B). Therefore, said movable mold core (4.1) pushes the spherical valve interior set (2) in a second direction (A) perpendicular to the first direction (B), in order to secure the same. With the injection machine pushing the plastic material into the mold (4), the plastic body (3.1) is shaped.

As the mold (4) opens, the movable mold core (4.1) connects the plastic body (3.1) that constitutes the body of the plastic adapter (3) with the valve body (1.5) in an opposite direction (C) to said first direction (B), in an integral manner, and allows the same to leave the mold (4).

In this way, the plastic adapter (3) and the valve body (1.5) that constitute the framework of the radiator valve (1) are manufactured as an integral component.

Said movable mold core (4.1) and the stationary mold core (4.2) shape the plastic material coming from the injection machine, in a way to include the insert (1.1) and the spherical valve interior set (2).

Upon mounting the spout (1.2), spout nut (1.3) and the valve handle (1.4) onto the spherical valve interior set (2) and the insert (1.1) located inside said valve body (1.5), the production of the plastic based radiator valve (2) is completed.

Said spout (1.2) is connected to the radiator by wrapping preferably the linen or teflon.

The main body of the plastic based radiator valve (1) that comprises the plastic adapter (3) and the valve body (1.5) is welded to the plastic pipe by means of the socket welding.

The spout nut (1.3) on the spout (1.2) connected to the radiator and the insert (1.1) are connected to each other. The plastic based radiator valve (1) carries out the opening-closing operation, being controlled by the valve handle (1.4).

The hot water inside the plastic pipe passes to the radiator owing to the plastic based radiator valve (1) and said radiator with hot water in turn, heats the ambience it is located.

The invention may not be limited to the representative embodiments presented in this section. The alternative embodiments that may be realized by the persons skilled in the art based on the fundamental components and/or methods within the protective scope as defined in the claims will constitute the violation of the invention.

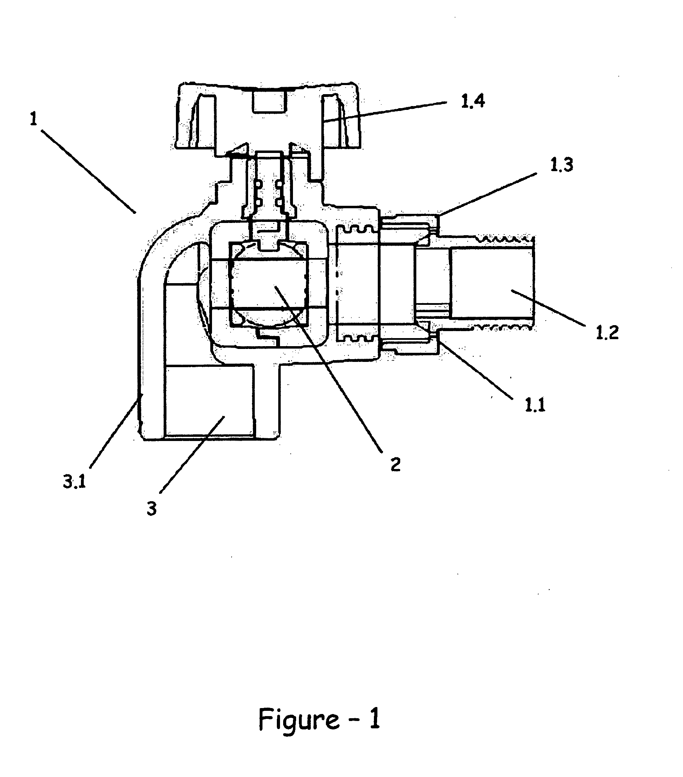

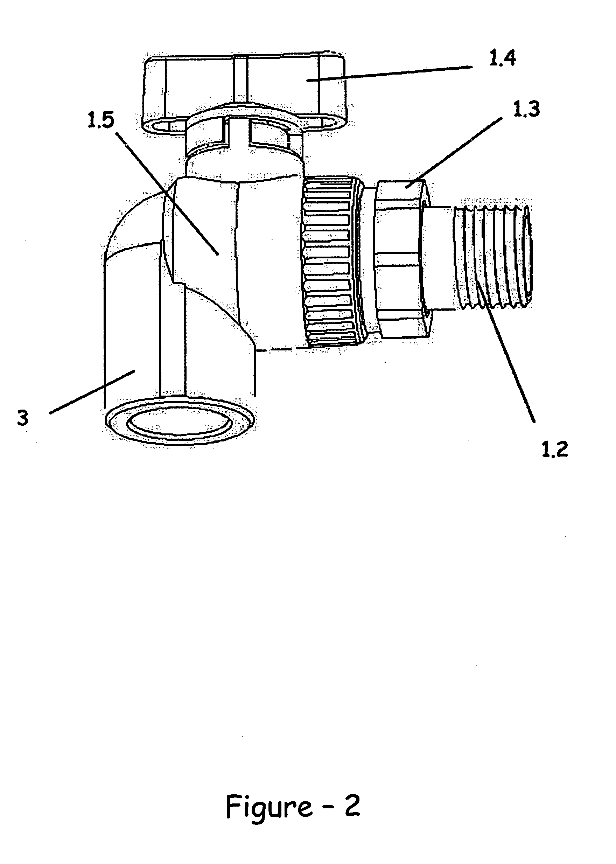

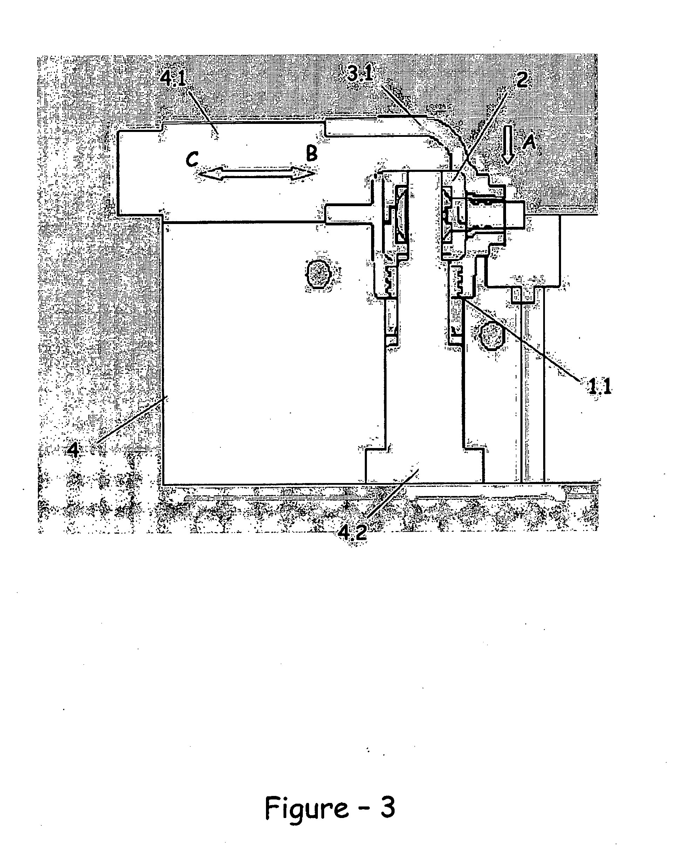

## Claims

1. Method for manufacturing, inside at least one mold (4), a plastic based radiator valve (1) used in the heating sector, said valve comprising at least one spherical valve interior set (2), at least one spout (1.2) providing the connection with the radiator and at least one insert (1.1) connected with said spout (1.2) **characterized in that** it comprises the steps of
- positioning said insert (1.1) on a stationary mold core (4.2) located inside said mold (4),
- positioning said spherical valve interior set (2) adjacent to said insert (1.1) on the stationary mold core (4.2),
- moving a movable mold core (4.1) located on said mold (4) in a synchronous manner with the closing of the mold (4) in a first direction (B),
- pushing of the spherical valve interior set (2) by said movable mold core (4.1) in a second direction (A) perpendicular to the first direction (B), in order to secure the same,
- pushing plastic material into said mold (4) by an injection machine, thus shaping the valve body (1.5) surrounding said insert (1.1) and the spherical valve interior set (2), and forming the plastic adapter (3) positioned in monobloc as the continuation of said valve body (1.5),
- moving of said movable mold core (4.1) in an opposite direction (C) to said first direction (B) synchronously with the opening of the mold (4), thus removing the monobloc valve body (1.5) and the plastic adapter (3) from said mold (4); wherein the at
- least one spout (1.2) is mounted on said valve body (1.5); and
- a spout nut (1.3) is mounted on said spout (1.2).

2. The method for manufacturing, inside at least one mold (4), a plastic based radiator valve (1) according to any of the preceding claims **characterized in that** at least one valve handle (1.4) is mounted on said valve body (1.5).

## Patentansprüche

1. Verfahren zum Herstellen, innerhalb zumindest einer Form (4), eines kunststoffbasierten Heizkörperventils (1) zum Gebrauch im Heizsektor, das Ventil umfassend zumindest einen kugelförmigen inneren Ventilsatz (2), zumindest ein Ausflussrohr (1.2), das die Verbindung mit dem Heizkörper vorsieht, und zumindest einen Einsatz (1.1), der mit dem Ausflussrohr (1.2) verbunden ist, **dadurch gekennzeichnet, dass** es folgende Schritte umfasst:
- Anordnen des Einsatzes (1.1) auf einem ortsfesten Formkern (4.2), der sich innerhalb der Form (4) befindet,
- Anordnen des kugelförmigen inneren Ventilsatzes (2) dem Einsatz (1.1) benachbart auf dem ortsfesten Formkern (4.2),
- Bewegen eines beweglichen Formkerns (4.1), der sich auf der Form (4) befindet, auf synchrone Art und Weise mit dem Schließen der Form (4) in einer ersten Richtung (B),
- Drücken des kugelförmigen inneren Ventilsatzes (2) durch den zweiten beweglichen Formkern (4.1) in eine zweite Richtung (A), die senkrecht zur ersten Richtung (B) verläuft, zum Befestigen desselben,
- Drücken des Kunststoffmaterials in die Form (4) durch eine Einspritzmaschine, wodurch der Ventilkörper (1.5), der den Einsatz (1.1) und den kugelförmigen Ventilinnsatz (2) umgibt, geformt wird und das Kunststoffpassstück (3), das aus einem Guss als Fortsetzung des Ventilkörpers (1.5) angeordnet ist, ausgebildet wird,
- Bewegen des beweglichen Formkerns (4.1) in eine Gegenrichtung (C) zur ersten Richtung (B) synchron mit dem Öffnen der Form (4), wodurch der aus einem Guss bestehende Ventilkörper (1.5) und das Kunststoffpassstück (3) aus der Form (4) entfernt werden; wobei das
- zumindest eine Ausflussrohr (1.2) an dem Ventilkörper (1.5) angebracht wird; und
- eine Ausgussrohrmutter (1.3) an dem Ausgussrohr (1.2) angebracht wird.

2. Verfahren zum Herstellen, innerhalb zumindest einer Form (4), eines kunststoffbasierten Heizkörperventils (1) nach einem der vorhergehenden Ansprüche, **dadurch gekennzeichnet, dass** der zumindest eine Ventilgriff (1.4) an dem Ventilkörper (1.5) angebracht wird.

## Revendications

1. Procédé pour la fabrication, à l'intérieur d'au moins un moule (4), d'une valve de radiateur (1) à base de plastique, utilisée dans le domaine du chauffage, ladite valve comprenant au moins un bloc de valve sphérique intérieur (2), au moins un bec (1.2) assurance la connexion avec le radiateur, et au moins un insert (1.1) relié audit bec (1.2), **caractérisé en ce qu'**il comprend les étapes suivantes :
- positionnement dudit insert (1.1) sur un noyau de moule stationnaire (4.2) situé à l'intérieur dudit moule (4),
- positionnement dudit bloc de valve sphérique intérieur (2) à côté dudit insert (1.1) sur le noyau de moule stationnaire (4.2),
- déplacement d'un noyau de moule mobile (4.1) situé sur ledit moule (4) de façon synchrone avec la fermeture du moule (4) dans une première direction (B),
- introduction du bloc de valve sphérique intérieur (2) à l'aide dudit noyau de moule mobile (4.1) dans une deuxième direction (A) perpendiculaire à la première direction (B), afin de fixer celui-ci,
- introduction d'une matière plastique dans ledit moule (4) à l'aide d'une machine d'injection, formant ainsi le corps de valve (1.5) entourant ledit insert (1.1) et le bloc de valve sphérique intérieur (2), et formant l'adaptateur en plastique (3) positionné en monobloc comme prolongement dudit corps de valve (1.5),
- déplacement dudit noyau de moule mobile (4.1) dans une direction opposée (C) à la première direction (B) de façon synchrone avec l'ouverture du moule (4), retirant ainsi le corps de valve monobloc (1.5) et l'adaptateur en plastique (3) dudit moule (4) ; dans lequel
- l'au moins un bec (1.2) est monté sur ledit corps de valve (1.5) ; et
- un écrou de bec (1.3) est monté sur ledit bec (1.2).

2. Procédé pour la fabrication, à l'intérieur d'au moins un moule (4), d'une valve de radiateur (1) à base de plastique selon l'une quelconque des revendications précédentes, **caractérisé en ce qu'**au moins une poignée de valve (1.4) est montée sur ledit corps de valve (1.5).
